# EUROPEAN PATENT SPECIFICATION

(11) **EP 3 782 332 B1**
(45) Date of publication and mention of the grant of the patent: **14.09.2022**
(21) Application number: 19722958.6
(22) Date of filing: 19.04.2019
(51) Int. Cl.: H04L 12/28, G05B 15/02

(54) **VOICE ASSISTANCE DEVICE FOR HOME AUTOMATION APPLICATIONS**
SPRACHUNTERSTÜTZUNGSVORRICHTUNG FÜR HEIMAUTOMATISIERUNGSANWENDUNGEN
DISPOSITIF D'ASSISTANCE VOCALE DESTINÉ À DES APPLICATIONS DOMOTIQUES

(30) Priority: 20.04.2018 IT 201800004737
(43) Date of publication of application: 24.02.2021
(73) Proprietor: Urmet S.p.A., 10154 Torino (IT)
(72) Inventor: MINARELLI, Giorgio, 10060 Pragelato (IT)
(74) Representative: Modiano, Micaela Nadia
(86) International application number: PCT/IB2019/053256
(87) International publication number: WO 2019/202561

(56) References cited:
- WO-A2-2005/047990
- US-A1- 2015 326 701
- US-A1- 2018 005 125

## Description

The present invention relates to a voice assistance device for home automation applications.

In the home automation and "smart home" sector, in recent years various electronic devices have been developed, commonly referred to as "voice assistants", which are capable of receiving oral queries or instructions and of providing vocal answers or of executing commands (e.g., performing online bookings or purchases, reproducing audio files etc.). In some cases, such devices are even capable of controlling, again using voice commands, other "intelligent" apparatuses in the home, e.g., lighting or heating systems, electronic locks and the like, typically by way of wireless technology communication standards, such as Zigbee^{®}, Z-Wave^{®} and the like.

Conventional voice assistant devices are typically enclosed in a freestanding loudspeaker housing, which can have various shapes or sizes as a function of the integrated components and of aesthetic considerations.

They include as main components:
- at least one microphone;
- at least one loudspeaker;
- an IP communications interface (wired or wireless) for connection to the internet;
- a microprocessor which is programmed to sample the audio signal of the microphone and transmit it to a dedicated server over the internet, which then converts the audio to text and processes it, as well as to receive audio streams in digital format from that same server, convert them to analog format, and play them by way of an amplifier on the loudspeaker.

The server on the internet converts the audio files to text through a Natural Language Processing (NLP) software layer, with the assistance of Speech To Text (STT) module. The text thus obtained, parsed into words, is interpreted by software so as to define the action to be carried out.

According to the action to be carried out, the server on the internet can:
- locally generate a response in text format, convert it to a digital audio file and send the latter to the voice assistance device in order to play it;
- consult another site in order to obtain the response, and send it to the voice assistance device in the same way as the example above;
- generate a command and send it to another site which will handle the command received (e.g., in order to control "intelligent" apparatuses in the home, as in the examples cited previously).

Such devices can be provided with an internal or external power supply that connects to the mains electricity supply via a power cable with a standard plug for the country where the device is distributed.

One drawback of conventional voice assistant devices such as the ones mentioned above is that they have a limited audio reception range: normally, for example, it is not possible to interrogate a device that is in a different room or, even more so, on a different floor, even if it is in the same dwelling.

In order to overcome such drawback, some systems make it possible to install multiple voice assistant devices in the same dwelling. In these cases, the microprocessors of the various devices are programmed to automatically recognize the device nearest to the user and enable it for the response, while the other devices are disabled.

However, the proliferation of devices entails problems of space occupation and of untidiness owing to power cables.

A further drawback of conventional devices for home automation which are provided with a microphone, such as those disclosed in US 2018/005125 A1, WO 2005/047990 and US 2015/326701 A1, which however do not relate to voice assistant devices, is that, even where it is possible to disable the microphone by pressing a dedicated button that mutes the microphone via software, they are vulnerable to attempts at eavesdropping carried out remotely by way of computer hacking operations.

Therefore, the aim of the present invention is to provide a voice assistance device for home automation applications which, while having all the advantages and functionalities of conventional voice assistants, solves their problems of space occupation and untidiness, especially when there are multiple installations and which is more secure against possible attempts at eavesdropping.

This aim and these and other objects which will become better apparent from the description that follows are achieved by a voice assistance device for home automation applications which has the characteristics recited in the appended claim 1, while the appended dependent claims define other characteristics of the invention which are advantageous, although secondary.

The invention will be now described in greater detail, with reference to a preferred but not exclusive embodiment thereof, which is illustrated for the purposes of non-limiting example in the accompanying drawings, wherein:
Figure 1 is an exploded perspective view of the voice assistance device according to the invention, in association with some additional components that are necessary for its installation;
Figure 2 is a perspective view of the voice assistance device in Figure 1 from a different angle;
Figure 3 is a perspective view of the voice assistance device and of the additional components of Figure 1 in the assembled configuration;
Figure 4 is a circuit diagram of the voice assistance device according to the invention.

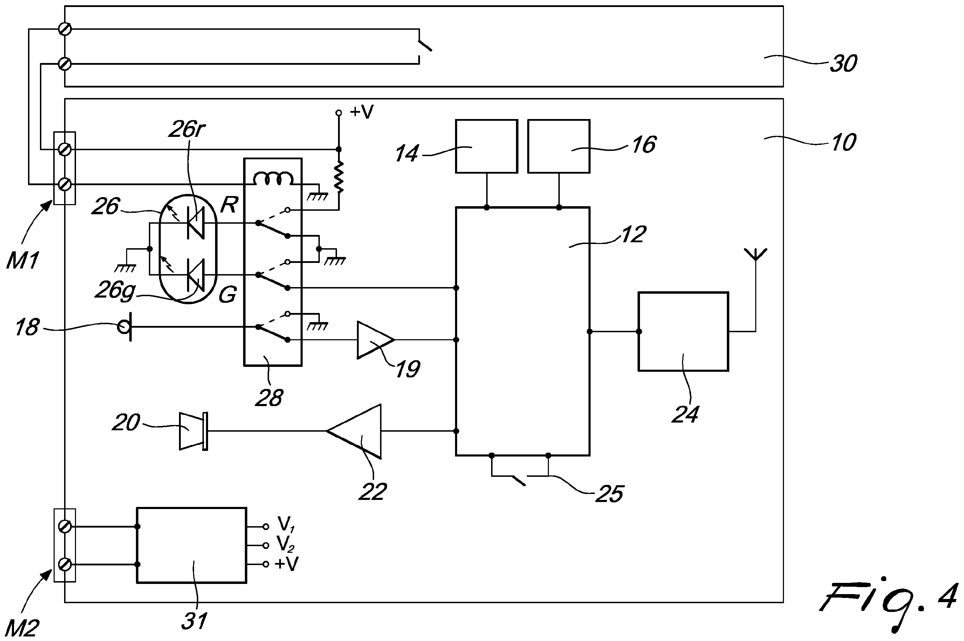

With initial reference to the circuit diagram in Figure 4, a voice assistance device 10 according to the invention comprises a microprocessor 12 with which a flash memory 14 and a RAM 16 are associated. The microprocessor 12 is connected to a microphone 18 by means of a first amplifier 19, and to a loudspeaker 20 by means of a second amplifier 22.

For the connection to a data communications network, typically the internet, the device 10 is provided with a wireless communications interface for local networks (WLAN) 24.

The microprocessor 12 is programmed to sample the audio signal of the microphone 18 and transmit it to a dedicated server over the internet. In a manner that is conventional per se, and therefore not discussed in detail in the present description, the server converts the audio to text, processes it, and returns audio flows in digital format to the device 10. The device 10 converts the received audio stream to analog format and plays it on the loudspeaker 20.

The microprocessor 12 can be reset using a reset switch 25.

The device 10 is advantageously provided with a two-color signaling LED 26, which is also functionally connected to the microprocessor 12. The LED 26 is provided with a first diode 26r, e.g. red in color, and with a second diode 26g, e.g. green in color, which are connected back-to-back.

The second diode 26g and the microphone 18 are connected respectively to the microprocessor 12 and to the first amplifier 19, which in turn is connected to the microprocessor 12, by way of a relay 28.

The relay 28 can be switched by way of a switch, preferably an external switch 30 that can be connected to the device 10 by way of a control terminal strip M1, between:
- a first position or "active" mode (switch 30 open - position shown with a solid line in Figure 4), in which the microphone 18 is connected to the microprocessor 12 by way of the first amplifier 19 and the second diode 26g is also connected to the microprocessor 12 so as to be able to emit, on command from the latter as will be seen in more detail below, a steady or flashing green light, while the first diode 26r is prevented from emitting light, and
- a second position or "confidentiality" mode (switch 30 closed - position shown with a dotted line in Figure 4), in which the microphone 18 is physically disconnected from the microprocessor 12 and the first diode 26r is connected to the power supply so as to emit a steady red light, while the second diode 26g is disconnected from the microprocessor 12 and therefore cannot be activated by the latter.

The device 10 further comprises an electric power supply module 31 which connects to the domestic mains electricity supply through a power supply terminal strip M2.

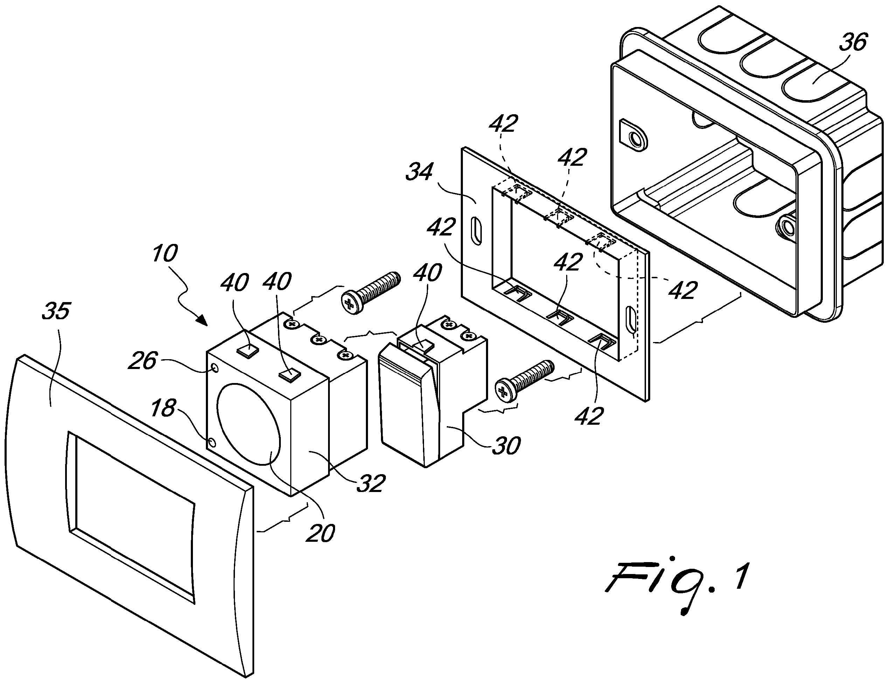

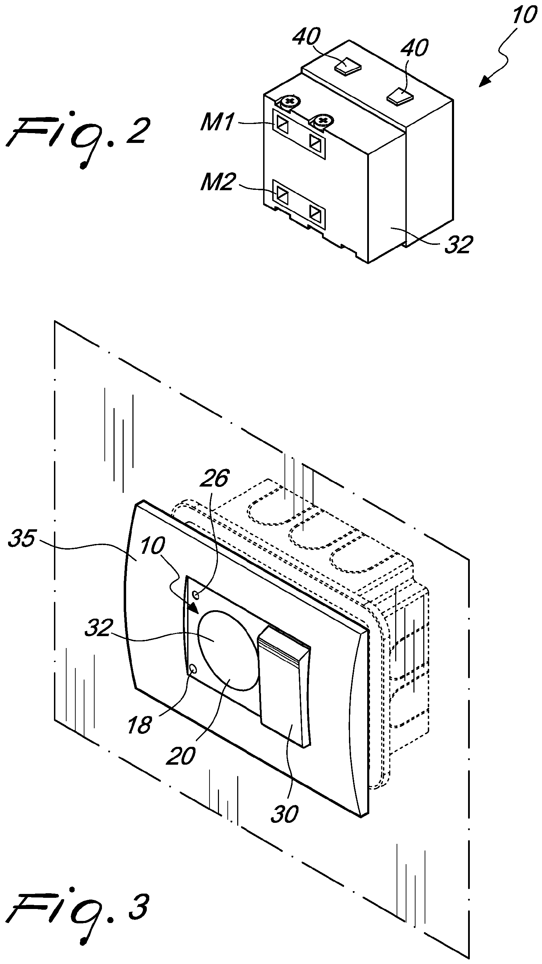

As shown in Figures 1 and 2, the device 10 is enclosed in a box-like fixture 32, which can be inserted and retained in a module-supporting frame 34 for wall-mounted electrical boxes, e.g., a flush-mounted box 36. A decorative plate 35 can be applied to the module-supporting frame 34, in a manner that is conventional per se.

Preferably, as shown in Figure 3, the device 10 is shaped and dimensioned to occupy two spaces in a module-supporting frame 34 according to the three-module standard operating in Italy. For a module-supporting frame 34 with space for three modules, the third space can be occupied by the switch 30, or by a switch intended for other functions, by a shunt, by a mains socket, or the like.

For affixing purposes, the box-like fixture 32 and the module-supporting frame 34 are provided with respective snap-fitting connection means, such as teeth 40 that are adapted to engage and be retained by corresponding elastic tabs 42, in a manner that is conventional per se in the sector.

In use, the voice assistance device 10 according to the invention can be installed wall-mounted inside a room, by way of the module-supporting frame 34 and the flush-mounted box 36 (or a box mounted proud of the wall), which can be conventional.

By virtue of the wall-mounted installation, the device 10 solves the problems of space occupation and untidiness of conventional systems, especially in multiple installations.

In active mode, the device 10 is voice-activated by way of a trigger word sent by the user through the microphone 18. The microprocessor 12 is programmed to alert the user that the trigger word has been recognized, by setting the second diode 26g to display a fixed or flashing green light.

After this, once the user's request has been received, the device 10 connects to the internet by way of a WLAN interface 24 and transmits the digital audio stream relating to the request to the server. The server will process the information received in the conventional way described above.

The device 10 is therefore capable of carrying out all operations that are common to conventional voice assistants. In particular, it is capable of receiving oral requests or instructions (e.g., performing online bookings or purchases, reproducing audio files etc.) and consequently responding.

According to an important advantage of the present invention, audio reception can be disabled by way of the switch 30, which switches the relay 28 to physically disconnect the microphone 18 from the microprocessor 12. Simultaneously, the red light of the LED 26 is activated, indicating that the device is in confidentiality mode.

As the person skilled in the art will be able to appreciate, such functionality renders the device 10 invulnerable to computer hacking operations aimed at eavesdropping.

The programming of the microprocessor 12 to execute the operations described above will not be discussed here, as it lies outside the scope of the present invention and is part of the normal knowledge of the person skilled in the art.

A preferred embodiment of the invention has been described, but obviously the person skilled in the art may make various modifications and variations within the scope of protection of the claims.

In particular, within the limits of the encumbrances, the device 10 according to the invention could implement modules for controlling respective "intelligent" systems or apparatuses in the home, e.g., heating systems, electronic locks and the like.

Furthermore, according to whether it is flush-mounted or mounted proud of the wall, the device 10 could have two or more microphones in order to improve reception.

Obviously the two-color indication LED can be substituted by other luminous or acoustic indication systems, e.g., a pair of independent LEDs, a buzzer etc.

Obviously, without affecting the general principle of integrating the device 10 in a box-like fixture that can be engaged and retained in a module-supporting frame for wall-mounting, the shape and the dimensions can vary widely as a function of the integrated components and of the standard in force in the country where the device proper is intended to be used. For example, the shape can be adapted for installation on a flush-mounted box with a circular profile, which is in use in most European countries.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A voice assistance device (10) for home automation applications, which comprises:
- at least one microphone (18),
- at least one loudspeaker (20),
- a communications interface (24) for connection to a data communications network,
- a microprocessor (12) which is programmed to sample the audio signal of the microphone (18) and transmit it, through said communications interface (24), over said data communications network for subsequent processing, as well as to receive audio streams from said data communications network in digital format, convert them to analog format, and play them on said loudspeaker (20), and
- an electric power supply module (31),
said device (10) being enclosed in a box-like fixture (32) which can be inserted and retained in a module-supporting frame (34) for wall-mounted electrical boxes (36), and being provided with a power supply terminal strip (M2) for the connection of said electric power supply module (31) to a domestic mains electricity supply, **characterized in that** said microphone (18) is connected to a first amplifier (19), said loudspeaker (20) is connected to a second amplifier (22), and **in that** said voice assistant device comprises a switching device (28) which is interposed in its switching function between said microphone (18) and said microprocessor (12), the switching device (28) being able to be switched by way of a switch (30) between a first position, in which said microphone (18) is physically connected to the microprocessor (12), and a second position, in which said microphone (18) is physically disconnected from the microprocessor (12) to protect the privacy of the users, and **in that** it further comprises signaling means (26) which are functionally connected to said switching device (28) in order to indicate whether it is in said first position or in said second position.

2. The device according to claim 1, **characterized in that** said communications interface is a wireless interface (24).

3. The device according to claim 1, **characterized in that** said switching device comprises a relay (28).

4. The device according to claim 3, **characterized in that** said signaling means comprise a first light-emitting diode (26r) which is adapted to be powered when said relay (28) is in said second position.

5. The device according to claim 3 or 4, **characterized in that** said signaling means comprise a second light-emitting diode (26g), which is adapted to be connected to said microprocessor (12) when said relay (28) is in said first position, said microprocessor (12) being programmed to activate said second light-emitting diode (26g) when a trigger word from the user is recognized.

6. The device according to one of claims 1-5, **characterized in that** said signaling means comprise a two-color LED (26).

7. The device according to one of claims 1-6, **characterized in that** it comprises a control terminal strip (M1) for the connection of an external switch (30) to said switching device (28).

## Patentansprüche

1. Eine Sprachunterstützungsvorrichtung (10) für Heimautomatisierungsanwendungen, die Folgendes umfasst:
- mindestens ein Mikrofon (18),
- mindestens einen Lautsprecher (20),
- eine Kommunikationsschnittstelle (24) zur Verbindung mit einem Datenkommunikationsnetz,
- einen Mikroprozessor (12), der programmiert ist, um das Audiosignal des Mikrofons (18) abzutasten und zur Weiterverarbeitung über die Kommunikationsschnittstelle (24) über das Datenkommunikationsnetz zu senden, und um im digitalen Format Audio-Streams von dem Datenkommunikationsnetz zu empfangen, sie in ein analoges Format umzuwandeln und auf dem Lautsprecher (20) abzuspielen, und
- ein elektrisches Stromversorgungsmodul (31),
wobei die Vorrichtung (10) in ein kastenartiges Gehäuse (32) eingeschlossen ist, das in einen modultragenden Rahmen (34) für wandmontierte Elektrokästen (36) eingefügt und darin gehalten ist; und mit einer Stromversorgungs-Klemmenleiste (M2) für den Anschluss des elektrischen Stromversorgungsmoduls (31) an eine Haushaltsnetz-Stromversorgung ausgestattet ist; **dadurch gekennzeichnet, dass** das Mikrofon (18) mit einem ersten Verstärker (19) verbunden ist, der Lautsprecher (20) mit einem zweiten Verstärker (22) verbunden ist, und dadurch, dass die Sprachunterstützungsvorrichtung eine Schaltvorrichtung (28) umfasst, die in ihrer Schaltfunktion zwischen dem Mikrofon (18) und dem Mikroprozessor (12) zwischengeschaltet ist; wobei die Schaltvorrichtung (28) über einen Schalter (30) zwischen einer ersten Position, in welcher das Mikrofon (18) physisch mit dem Mikroprozessor (12) verbunden ist, und einer zweiten Position geschaltet werden kann, in welcher das Mikrofon (18) physisch vom Mikroprozessor (12) getrennt ist, um die Privatsphäre der Benutzer zu schützen; und dadurch, dass sie weiter Signalmittel (26) umfasst, die funktionell mit der Schaltvorrichtung (28) verbunden sind, um anzuzeigen, ob sie sich in der ersten Position oder in der zweiten Position befindet.

2. Die Vorrichtung gemäß Anspruch 1, **dadurch gekennzeichnet, dass** die Kommunikationsschnittstelle eine Funkschnittstelle (24) ist.

3. Die Vorrichtung gemäß Anspruch 1, **dadurch gekennzeichnet, dass** die Schaltvorrichtung ein Relais (28) umfasst.

4. Die Vorrichtung gemäß Anspruch 3, **dadurch gekennzeichnet, dass** die Signalmittel eine erste Leuchtdiode (26r) umfassen, die ausgebildet ist, um mit Strom versorgt zu werden, wenn sich das Relais (28) in der zweiten Position befindet.

5. Die Vorrichtung gemäß Anspruch 3 oder 4, **dadurch gekennzeichnet, dass** die Signalmittel eine zweite Leuchtdiode (26g) umfassen, die ausgebildet ist, um mit dem Mikroprozessor (12) verbunden zu werden, wenn sich das Relais (28) in der ersten Position befindet, wobei der Mikroprozessor (12) programmiert ist, um die zweite Leuchtdiode (26g) zu aktivieren, wenn ein vom Benutzer gebrauchtes Schlüsselwort erkannt wird.

6. Die Vorrichtung gemäß einem der Ansprüche 1-5, **dadurch gekennzeichnet, dass** die Signalmittel eine zweifarbige LED (26) umfassen.

7. Die Vorrichtung gemäß einem der Ansprüche 1-6, **dadurch gekennzeichnet, dass** sie eine Steuerungs-Klemmenleiste (M1) für die Verbindung eines externen Schalters (30) mit der Schaltvorrichtung (28) umfasst.

## Revendications

1. Dispositif d'assistance vocale (10) pour applications d'automatisation domestiques, qui comprend :
- au moins un microphone (18),
- au moins un haut-parleur (20),
- une interface de communication (24) pour connexion à un réseau de communication de données,
- un microprocesseur (12) qui est programmé pour échantillonner le signal audio du microphone (18) et transmettre celui-ci, par l'intermédiaire de ladite interface de communication (24), sur ledit réseau de communication de données pour traitement ultérieur, ainsi que pour recevoir des flux audio depuis ledit réseau de communication de données dans un format numérique, convertir ceux-ci dans un format analogique, et lire ceux-ci sur ledit haut-parleur (20), et
- un module d'alimentation électrique (31),
ledit dispositif (10) étant confiné dans un dispositif de fixation de type boîte (32) qui peut être inséré et retenu dans un cadre de support de module (34) pour des boîtes électriques à montage mural (36), et étant pourvu d'une barrette de bornes d'alimentation (M2) pour la connexion dudit module d'alimentation électrique (31) à une alimentation d'électricité de secteur domestique, **caractérisé en ce que** ledit microphone (18) est connecté à un premier amplificateur (19), ledit haut-parleur (20) est connecté à un deuxième amplificateur (22), et **en ce que** ledit dispositif d'assistance vocale comprend un dispositif de commutation (28) qui est intercalé dans sa fonction de commutation entre ledit microphone (18) et ledit microprocesseur (12), le dispositif de commutation (28) pouvant être commuté au moyen d'un commutateur (30) entre une première position, dans lequel ledit microphone (18) est physiquement connecté au microprocesseur (12), et une deuxième position, dans laquelle ledit microphone (18) est physiquement déconnecté du microprocesseur (12) pour protéger la confidentialité des utilisateurs, et **en ce qu'**il comprend en outre des moyens de signalisation (26) qui sont fonctionnellement connectés audit dispositif de commutation (28) afin d'indiquer s'il est dans ladite première position ou dans ladite deuxième position.

2. Dispositif selon la revendication 1, **caractérisé en ce que** ladite interface de communication est une interface sans fil (24).

3. Dispositif selon la revendication 1, **caractérisé en ce que** ledit dispositif de commutation comprend un relais (28) .

4. Dispositif selon la revendication 3, **caractérisé en ce que** lesdits moyens de signalisation comprennent une première diode électroluminescente (26r) qui est adaptée pour être alimentée lorsque ledit relais (28) est dans ladite deuxième position.

5. Dispositif selon la revendication 3 ou 4, **caractérisé en ce que** lesdits moyens de signalisation comprennent une deuxième diode électroluminescente (26g), qui est adaptée pour être connectée audit microprocesseur (12) lorsque ledit relais (28) est dans ladite première position, ledit microprocesseur (12) étant programmé pour activer ladite deuxième diode électroluminescente (26g) lorsqu'un mot déclencheur provenant de l'utilisateur est reconnu.

6. Dispositif selon l'une des revendications 1 à 5, **caractérisé en ce que** lesdits moyens de signalisation comprennent une DEL à deux couleurs (26).

7. Dispositif selon l'une des revendications 1 à 6, **caractérisé en ce qu'**il comprend une barrette de bornes de commande (M1) pour la connexion d'un commutateur externe (30) audit dispositif de commutation (28).
